# EUROPÄISCHE PATENTSCHRIFT

(11) **EP 3 314 962 B1**
(45) Veröffentlichungstag und Bekanntmachung des Hinweises auf die Patenterteilung: **14.08.2019**
(21) Anmeldenummer: 16722631.5
(22) Anmeldetag: 09.05.2016
(51) Int. Cl.: G01S 5/02, H04W 64/00

(54) **VERFAHREN, COMPUTER-LESBARES MEDIUM, UND SYSTEM ZUM ERZEUGEN VON REFERENZDATEN FÜR EINE POSITIONSBESTIMMUNG VON OBJEKTEN RELATIV ZU EINEM FAHRZEUG**
METHOD, COMPUTER-READABLE MEDIUM, AND SYSTEM FOR GENERATING REFERENCE DATA FOR DETERMINING THE POSITION OF OBJECTS RELATIVE TO A VEHICLE
PROCÉDÉ, SUPPORT LISIBLE PAR ORDINATEUR, ET SYSTÈME DE GÉNÉRATION DE DONNÉES DE RÉFÉRENCE POUR DETERMINER LA POSITION D'OBJETS PAR RAPPORT À UN VÉHICULE

(30) Priorität: 25.06.2015 DE 102015211833
(43) Veröffentlichungstag der Anmeldung: 02.05.2018
(73) Patentinhaber: Bayerische Motoren Werke Aktiengesellschaft, 80809 München (DE)
(72) Erfinder: HEINBOCKEL, Stefan, 81735 München (DE); WISTORF, Ralf, 81737 München (DE)
(86) Internationale Anmeldenummer: PCT/EP2016/060283
(87) Internationale Veröffentlichungsnummer: WO 2016/206849

(56) Entgegenhaltungen:
- DE-A1-102012 204 673
- US-A1- 2007 139 269
- HENDRIK LEMELSON ET AL: "Improvements for 802.11-Based Location Fingerprinting Systems", COMPUTER SOFTWARE AND APPLICATIONS CONFERENCE, 2009. COMPSAC '09. 33RD ANNUAL IEEE INTERNATIONAL, IEEE, PISCATAWAY, NJ, USA, 20. Juli 2009 (2009-07-20), Seiten 21-28, XP031529613, ISBN: 978-0-7695-3726-9

## Beschreibung

Die Erfindung betrifft ein Verfahren zum Erzeugen von Referenzdaten für eine Positionsbestimmung von Objekten relativ zu einem Fahrzeug.

Fahrzeugzugangssysteme können eine Position von Objekten, z.B. Zugangsidentifikationsgeräte, relativ zu einem Fahrzeug bestimmen. Dazu können eine vorgegebene Anzahl von Kommunikationsantennen in dem Fahrzeug eingebracht werden, die mit den Objekten kommunizieren können. Die Kommunikation kann über Funksignale der Kommunikationsantennen erfolgen. Dabei können Eigenschaften der Funksignale gemessen werden, um die Position eines Objekts zu ermitteln. Die Eigenschaften der Funksignale können sich je nach Fahrzeugtyp unterscheiden, so dass eine Anpassung der Fahrzeugzugangssysteme für jedes Fahrzeug und/oder jeden Fahrzeugtyp erneut durchgeführt werden muss.

Die Patentanmeldung US 2007/0139269 A1 offenbart ein System zur Schätzung eines Objekts. Das System umfasst ein einen Kartengenerator, der dazu ausgebildet ist eine mittlere Karte ohne ein Ausbreitungsmodell zu erzeugen, und eine Messungsabgleichkomponente, die mit dem Kartenerzeuger gekoppelt ist und dazu ausgebildet ist empfangene Messungen bezüglich des Objekts mit einer Anzahl von am nächsten in der Nachbarschaft liegenden Netzpunkten in der mittleren Karte abzugleichen.

Das Dokument von Lemelson u. a. mit dem Titel "Improvements for 802.11-based Location Fingerprinting Systems" offenbart ein Verfahren zum Clustern von Fingerprints, welches einen Positionsfehler auf Trainingsdaten schätzt.

Es ist daher eine Aufgabe der Erfindung eine Positionsbestimmung von Objekten relativ zu einem Fahrzeug zu verbessern. Insbesondere ist es eine Aufgabe der Erfindung, ein Anpassen der Positionsbestimmung von Objekten relativ zu dem Fahrzeug an verschiedene Fahrzeuge und/oder Fahrzeugtypen zu verbessern.

Gelöst wird diese Aufgabe durch ein Verfahren, eine System, sowie ein Computer-lesbares Medium mit den Merkmalen gemäß den jeweiligen unabhängigen Patentansprüchen. Vorteilhafte Ausgestaltungen sind Gegenstand der abhängigen Patentansprüche.

Gemäß einem Aspekt wird ein Verfahren nach Anspruch 1 zum Erzeugen von Referenzdaten für eine Positionsbestimmung von Objekten relativ zu einem Fahrzeug beschrieben. Das Verfahren umfasst das Ermitteln eines Messwerts eines Funksignals für jede Position eines Objekts aus einer vorgegebenen Anzahl an Positionen des Objekts in mindestens zwei räumlichen Zonen des Fahrzeugs. Ein Objekt kann ein Identifikationsgerät, z.B. ein Mobiltelefon, ein Fahrzeugschlüssel, eine Zugangsidentifikationsgerät, eine Ladevorrichtung, und/oder ein Sensorsystem, sein. Das Verfahren umfasst ferner das Bestimmen von Schwerpunkten für die ermittelten Messwerte in jeder räumlichen Zone des Fahrzeugs, wobei jeder Schwerpunkt eine Gruppe von ermittelten Messwerten in einer der vordefinierten räumlichen Zonen des Fahrzeugs repräsentiert. Weiterhin umfasst das Verfahren das Speichern der Schwerpunkte als Referenzdaten für die Positionsbestimmung von Objekten in dem Fahrzeug. Bei einem Schwerpunkt kann es sich um einen Messwert handeln, der aus den ermittelten Messwerten berechnet wird und eine Gruppe von Messwerten repräsentiert, die sich in der Nähe des Schwerpunkts befinden. Ein Schwerpunkt kann eine räumliche Zone in Unterbereiche oder Cluster aufteilen. Ein Schwerpunkt kann dabei charakteristisch für Messwerte in einem Unterbereich oder einem Cluster einer räumlichen Zone sein. Durch des Bestimmen und Speichern von Schwerpunkten zu ermittelten Messwerten können Referenzdaten für eine Positionsbestimmung von Objekten relativ zu einem Fahrzeug effizient bestimmt werden.

Gemäß einer vorteilhaften Ausgestaltung kann jeder Schwerpunkt so bestimmt werden, dass eine Distanz der ermittelten Messwerte zu einem Schwerpunkt möglichst gering ist. Durch das Verwenden eines Distanzmaßes kann die Bestimmung eines Schwerpunkts vereinfacht werden.

Gemäß einer weiteren, vorteilhaften Ausgestaltung kann eine Anzahl an Schwerpunkten in einer der vordefinierten räumlichen Zonen in Abhängigkeit einer vorgegebenen Erfolgsrate für eine Bestimmung der vordefinierten räumlichen Zonen festgelegt werden, wobei die Anzahl der Schwerpunkte kleiner als die Anzahl der ermittelten Messwerte in einer der vordefinierten räumlichen Zonen sein kann. Hiermit kann die Anzahl der Schwerpunkte dynamisch angepasst werden, so dass die Referenzdaten eine Mindestgüte aufweisen.

Das Verfahren umfasst weiterhin das Erzeugen einer Testmenge aus den ermittelten Messwerten, das Auswählen eines Messwerts aus der Testmenge, das Berechnen einer Position des ausgewählten Messwerts relativ zu einem oder mehreren gespeicherten Schwerpunkten, das Bestimmen einer räumlichen Zone zugehörig zu der berechneten Position des ausgewählten Messwerts, das Verifizieren der bestimmten räumlichen Zone des ausgewählten Messwerts, und das Aktualisieren der Erfolgsrate für die Bestimmung der vordefinierten räumlichen Zonen. Hiermit kann eine effiziente, automatische Verifikation und/oder Validierung der Schwerpunkte erfolgen.

Gemäß einer weiteren, vorteilhaften Ausgestaltung kann das Verfahren weiterhin das Ändern der Anzahl der Schwerpunkte, das Berechnen der geänderten Anzahl von Schwerpunkten für die ermittelten Messwerte in jeder räumlichen Zone des Fahrzeugs, das Auswählen eines Messwerts aus der Testmenge, das Berechnen einer Position des ausgewählten Messwerts relativ zu einem oder mehreren gespeicherten Schwerpunkten, das Bestimmen einer räumlichen Zone zugehörig zu der berechneten Position des ausgewählten Messwerts, das Verifizieren der bestimmten räumlichen Zone des ausgewählten Messwerts, und das Aktualisieren der Erfolgsrate für die Bestimmung der vordefinierten räumlichen Zonen umfassen, falls die Erfolgsrate für die Bestimmung der vordefinierten räumlichen Zonen einen vorgegebenen Schwellwert unterschreitet. In anderen Worten: Die Anzahl der Schwerpunkte kann verändert werden, um eine Mindestgüte für die Referenzdaten und insbesondere für die Positionsbestimmung mittels der Referenzdaten zu erreichen. Hiermit kann effizient die Referenzdaten verbessert werden.

Das Verfahren umfasst ferner das Speichern der Schwerpunkte als Referenzdaten für die Positionsbestimmung von Objekten relativ zu dem Fahrzeug in dem Fahrzeug, falls die Erfolgsrate für die Bestimmung der vordefinierten räumlichen Zonen den vorgegebenen Schwellwert überschreitet. Hiermit kann sichergestellt werden, dass die Referenzdaten bei Erreichen oder Überschreiten einer Mindestgüte in dem Fahrzeug gespeichert werden.

Gemäß einer weiteren, vorteilhaften Ausgestaltung können die empfangenen Messwerte einer Vorverarbeitung unterzogen werden, bevor die Schwerpunkte bestimmt werden. Die Vorverarbeitung kann physikalische Effekte des Funksignals berücksichtigen. Beispielsweise kann bei jedem Messwert die dritte Wurzel berechnet werden, um den Effekt, dass ein magnetisches Feld mit der dritten Potenz abnimmt, zu dämpfen. Hiermit können effizient physikalische Effekte des Funksignals gefiltert werden, um eine präzisere Berechnung der Schwerpunkte und damit eine präzisere Berechnung der Referenzdaten zu ermöglichen.

Gemäß einer weiteren, vorteilhaften Ausgestaltung, können die ermittelten Messwerte und/oder die Positionen des Objekts in einem Grenzbereich zwischen mindestens zwei räumlichen Zonen höher als die ermittelten Messwerte außerhalb des Grenzbereichs gewichtet sein. Beispielsweise können die gewichteten Messwerte und/oder Positionen des Objekts dazu verwendet werden, um eine gewichtete Berechnung der Erfolgsrate zu ermöglichen. Eine erfolgreiche bzw. nicht erfolgreiche Bestimmung der korrekten Zone eines gewichteten Messwerts und/oder einer gewichteten Position des Objekts während des Verifizierens der Zone kann somit stärker die Erfolgsrate beeinflussen. Hiermit kann eine verbesserte Verifikation des Grenzbereichs der räumlichen Zonen durchgeführt werden.

Gemäß einem weiteren Aspekt ist ein Computer-lesbares Medium nach Anspruch 7 zum Erzeugen von Referenzdaten für eine Positionsbestimmung von Objekten relativ zu einem Fahrzeug beschrieben, wobei das Computer-lesbare Medium Instruktionen umfasst, die, wenn ausgeführt auf einem Rechner, das oben beschriebene Verfahren ausführen.

Gemäß einem weiteren Aspekt ist ein System nach Anspruch 8 zum Erzeugen von Referenzdaten für eine Positionsbestimmung von Objekten relativ zu einem Fahrzeug beschrieben, wobei das System dazu ausgebildet ist, das oben beschriebene Verfahren auszuführen.

Im Folgenden wird anhand der beigefügten Zeichnungen ein bevorzugtes Ausführungsbeispiel der Erfindung beschrieben. Daraus ergeben sich weitere Details, bevorzugte Ausgestaltungen und Weiterbildungen der Erfindung. Im Einzelnen zeigen schematisch
**Fig. 1** eine beispielhafte Aufteilung eines Bereichs in und um ein Fahrzeug in räumliche Zonen,
**Fig. 2** eine beispielhafte Messwertaufnahme innerhalb der räumlichen Zonen,
**Fig. 3** ein beispielhaftes Bestimmen von Schwerpunkten für Gruppen von Messwerten innerhalb den räumlichen Zonen, und
**Fig. 4** ein Beispiel für eine Positionsbestimmung eines Objekts relativ zu einem Fahrzeug mittels Schwerpunkten.

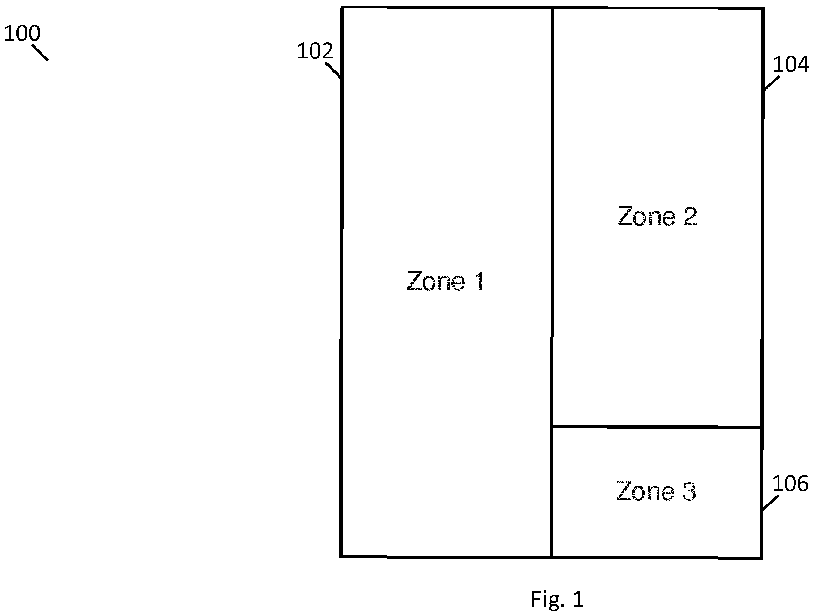

Im Detail zeigt **Fig. 1** eine beispielhafte Aufteilung 100 eines Bereichs in und um ein Fahrzeug in räumliche Zonen. Eine räumliche Zone kann einen Bereich innerhalb des Fahrzeugs und/oder außerhalb des Fahrzeugs spezifizieren. Der Begriff "räumliche Zone" und der Begriff "Zone" werden in vorliegendem Dokument synonym verwendet. Eine räumliche Zone 102 kann einem Bereich entlang einer oder mehrere Türen, z.B. der Fahrertür, des Fahrzeugs entsprechen. Eine weitere räumliche Zone 104 kann einem Innenraum des Fahrzeugs entsprechen. Eine räumliche Zone 106 kann ferner einen Kofferraum des Fahrzeugs repräsentieren. Vorzugsweise kann der Bereich in und um das Fahrzeug in mindestens zwei Zonen aufgeteilt werden. Beispielsweise kann der Bereich in und um das Fahrzeug in 2, 3, 4, 5, 6, 7, 8, 9, oder 10 Zonen eingeteilt werden. Mit der Erhöhung der Anzahl der Zonen kann ein Objekt genauer einem Bereich in und/oder um das Fahrzeug zugewiesen werden.

Die Anzahl der Zonen kann beliebig gewählt werden, d.h. mehr als 10 Zonen umfassen. Die Anzahl und die Größe der Zonen, die ein Fahrzeug unterscheiden kann, können variabel sein und an verschiedene Anwendungen angepasst werden. Mögliche Anwendungen können eine Positionsbestimmung eines Objekts relativ zu einem Fahrzeug sein. Dazu kann das Objekt bewegt werden oder stationär sein und/oder das Fahrzeug stehen oder in Bewegung sein. Beispielsweise kann das Objekt stationär sein und das Fahrzeug relativ zu dem stationären Objekt bewegt werden. Beispielsweise kann das Objekt bewegt werden und das Fahrzeug stehen. Beispielsweise kann das Objekt bewegt werden und das Fahrzeug in Bewegung sein. In jedem Szenario kann die Positionsbestimmung des Objekts relativ zu dem Fahrzeug durchgeführt werden, um das Objekt in einer der räumlichen Zonen zu bestimmen.

Ferner können räumliche Zonen Grenzen zu weiteren räumlichen Zonen haben. Wie in Fig. 1 gezeigt, kann die räumliche Zone 102 eine Grenze zu der räumlichen Zone 104 und zu der räumlichen Zone 106 umfassen. Die räumliche Zone 104 kann eine Grenze zu den räumlichen Zonen 102 und 106 umfassen. Und die räumliche Zone 106 kann eine Grenze zu den räumlichen Zonen 102 und 104 umfassen. Durch das Festlegen der Zonen 102, 104, und 106 und der Grenzen zwischen den Zonen können Objekte in den Zonen 102, 104, und/oder 106 bestimmt werden. Ist das Objekt beispielsweise ein Zugangsidentifikationsgerät, so kann bestimmt werden, in welcher Zone sich das Zugangsidentifikationsgerät befindet. Befindet sich das Zugangsidentifikationsgerät beispielsweise in Zone 1, was einem Bereich auf der Fahrerseite des Fahrzeugs entsprechen kann, so kann das Fahrzeug erkennen, dass das Zugangsidentifikationsgerät sich in der Nähe des Fahrzeugs befindet und entsprechende Aktionen wie beispielsweise das Entsperren der Fahrertür des Fahrzeugs durchführen.

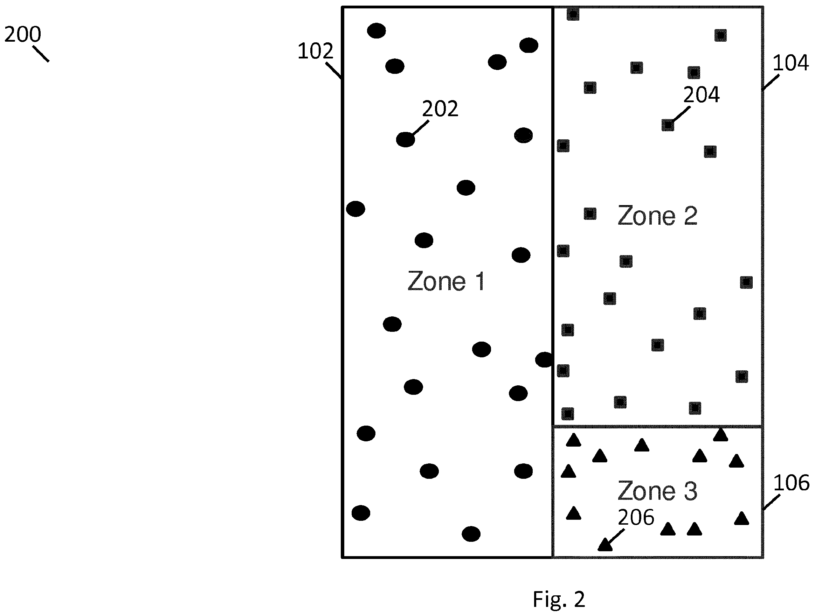

**Fig. 2** zeigt eine beispielhafte Messwertaufnahme 200 innerhalb der räumlichen Zonen 102, 104, und 106 des Fahrzeugs. Zum Aufnehmen bzw. Ermitteln eines Messwerts kann ein Objekt an eine Position innerhalb einer Zone positioniert werden. An der Position des Objekts kann das Objekt eines oder mehrere Funksignale des Fahrzeugs empfangen. Die Funksignale können von Antennen, insbesondere Kommunikationsantennen, gesendet werden, die in dem Fahrzeug integriert sind. Vorzugsweise können die Funksignale sequentiell von den Antennen des Fahrzeugs empfangen werden. Für jedes empfangene Funksignal kann das Objekt einen oder mehrere Messwerte eines oder mehrerer Merkmale des Funksignals ermitteln. Die Messwerte des Funksignals können die Merkmale Feldstärke und/oder Richtung des Funksignals und/oder Phasenlage der Funksignale untereinander umfassen. Messwerte von Merkmalen mehrerer Funksignale an einer Position des Objekts können zu Merkmalsvektoren zusammengefast werden. In anderen Worten: Der Merkmalsvektor kann die Position des Objekts über die Messwerte der empfangenen Funksignale definieren.

Wie in Fig. 2 gezeigt, können Messwerte bzw. Merkmalsvektoren von Messwerten für eine Reihe von Positionen des Objekts innerhalb der jeweiligen Zonen 102, 104, und/oder 106 ermittelt werden. Ein Messwert bzw. ein Merkmalsvektor an Messwerten kann einer bestimmten Zone zugeordnet werden. Bei dem Ermitteln des Messwerts ist bekannt in welcher Zone der Messwert ermittelt wurde. Die Zone kann mit dem ermittelten Messwert und/oder dem ermittelten Merkmalsvektor von Messwerten verknüpft werden. In Fig. 2 ist beispielsweise der Messwert 202 mit der Zone 102, der Messwert 204 mit der Zone 104, und der Messwert 206 mit der Zone 106 verknüpft. Durch die Verknüpfung eines Messwerts bzw. eines Merkmalsvektors von Messwerten mit einer Zone kann eine korrekte Zuordnung eines Messwerts bzw. eines Merkmalsvektors von Messwerten sichergestellt werden.

Vorzugsweise ist die maximale Anzahl der Positionen der Objekte in einer Zone vorgegeben. Die maximale Anzahl der Positionen der Objekte kann dabei beliebig gewählt werden. Beispielsweise kann festgelegt werden, dass in jeder Zone an maximal 200 Positionen des Objekts Messwerte bzw. Merkmalsvektoren von Messwerten ermittelt werden. Die Positionen des Objekts zum Aufnehmen bzw. Ermitteln der Messwerte an diesen Positionen können frei in den jeweiligen Zonen frei gewählt werden. Vorzugsweise können die Positionen des Objekts zufällig in dem Bereich einer Zone gewählt werden. An jeder der zufällig gewählten Position kann das Objekt positioniert und die Messwerte der empfangenen Funksignale bestimmt werden. Zusätzlich oder alternativ können Positionen an bestimmten Stellen einer Zone gehäuft ausgewählt werden. Beispielweise kann an einer Grenze zwischen zwei Zonen oder an besonderen Stellen innerhalb einer Zone, gehäuft Positionen des Objekts bestimmt werden, an denen die Messwerte bestimmt werden. Die Bestimmung der Positionen des Objekts innerhalb der dazugehörigen räumlichen Zone kann automatisiert erfolgen. Ferner kann zusätzlich oder alternativ manuell eine Position des Objekts definiert werden, an der Messwerte der Funksignale ermittelt werden sollen.

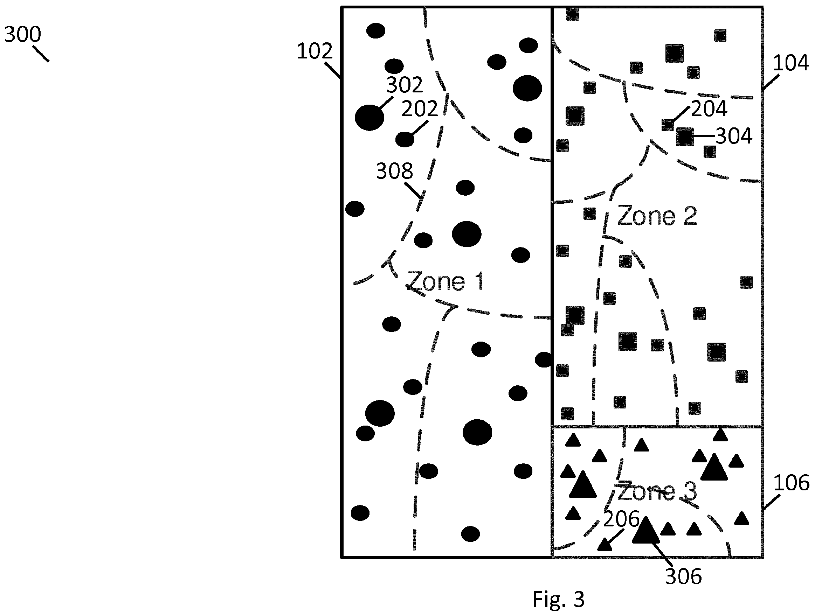

Das Objekt kann die ermittelten Messwerte bzw. Merkmalsvektoren von Messwerten an den gewählten Positionen speichern. Alternativ kann das Objekt die ermittelten Messwerte an einen Rechner und/oder ein Steuergerät des Fahrzeugs über eine drahtlose oder kabelgebundene Kommunikationsschnittstelle übertragen. Der Rechner und/oder das Steuergerät können die empfangenen Messwerte bzw. Merkmalsvektoren von Messwerten empfangen und/oder verarbeiten. Insbesondere können der Rechner und/oder das Steuergerät Schwerpunkte der ermittelten Messwerte bzw. Merkmalsvektoren von Messwerten berechnen wie anhand Fig. 3 näher erläutert wird.

Zusätzlich kann vor dem Bestimmen der Schwerpunkte eine Vorverarbeitung der ermittelten Messwerte der Funksignale erfolgen. Die Vorverarbeitung kann physikalische Effekte des Funksignals berücksichtigen. Beispielsweise kann bei jedem Messwert die dritte Wurzel berechnet werden, um den Effekt, dass ein magnetisches Feld mit der dritten Potenz abnimmt, zu dämpfen. Hiermit können effizient physikalische Effekte des Funksignals gefiltert werden, um eine präzisere Berechnung der Schwerpunkte und damit eine präzisere Berechnung der Referenzdaten zu ermöglichen.

Ein Aufnehmen bzw. Ermitteln der Messwerte kann für jede räumliche Zone durchgeführt werden. Die Messwerte können mit der räumlichen Zone verknüpft werden, in der die Messwerte ermittelt wurde. Die Messwerte und die dazugehörige räumliche Zone können gespeichert werden. Durch die Verknüpfung der Zone mit den Messwerten an der Position des Objekts kann korrekt festgestellt werden, in welcher Zone die Messwerte ermittelt wurden. Das Aufnehmen bzw. Ermitteln von Messwerten kann für jedes Fahrzeug bzw. für jeden Fahrzeugtyp neu vorgenommen werden. Nach der Aufnahme bzw. dem Ermitteln der Messwerte an den Positionen des Objekts kann eine Berechnung der Referenzdaten erfolgen.

Die Berechnung der Referenzdaten kann automatisiert durchgeführt werden, so dass eine einfache Anpassung der Referenzdaten an verschiedenen Fahrzeugen und/oder Fahrzeugtypen ermöglicht wird.

Zusätzlich oder alternativ kann aus der Menge der ermittelten Messwerte bzw. Merkmalsvektoren von Messwerten in jeder räumlichen Zone eine Testmenge erzeugt werden. Die Testmenge kann eine zufällig ausgewählte Anzahl von ermittelten Messwerten bzw. Merkmalsvektoren und die dazugehörige räumliche Zone umfassen. Die Anzahl der Messwerte bzw. Merkmalsvektoren kann variabel sein und dynamisch geändert bzw. konfiguriert werden. Die Testmenge kann für die automatische Verifikation der Positionsbestimmung von Objekten verwendet werden. Insbesondere kann die Testmenge für die Verifikation von Referenzdaten bzw. eines Referenzdatensatzes verwendet werden.

**Fig. 3** zeigt ein beispielhaftes Bestimmen bzw. Berechnen 300 von Schwerpunkten für Gruppen von Messwerten innerhalb den Zonen 102, 104, und/oder 106. Ein Schwerpunkt kann eine oder mehrere Messwerte umfassen. Vorzugsweise ist ein Schwerpunkt ein Merkmalsvektor von Messwerten. Ein Schwerpunkt kann eine Gruppe von Messwerten bzw. Merkmalsvektoren von Messwerten repräsentieren, die in der Nähe des Schwerpunkts ermittelt wurden. In anderen Worten: Ein Schwerpunkt kann charakteristisch für einen Teilbereich einer Zone sein. Wie in Fig. 3 gezeigt, kann ein Schwerpunkt 302 für vier der in der Nähe liegenden Messwerte 202 bzw. Merkmalsvektoren von Messwerten berechnet werden. Eine gestrichelte Linie 308 zeigt exemplarisch, dass der Schwerpunkt 302 für den durch die gestrichelte Linie angedeutet Teilbereich der räumlichen Zone 102 charakteristisch ist. In anderen Worten: Der Schwerpunkt kann ein Merkmalsvektor sein, der Messwerte von Funksignalen umfasst, die aus den ermittelten Messwerten der Funksignale in der Nähe der Position des Schwerpunkts berechnet werden. Die berechneten Schwerpunkte repräsentieren die Referenzdaten bzw. den Referenzdatensatz für die Positionsbestimmung von Objekten. Für jedes Fahrzeug bzw. für jeden Fahrzeugtyp können die Schwerpunkte automatisch neu berechnet werden, so dass die Positionsbestimmung von Objekten effizient an das jeweilige Fahrzeug bzw. den jeweiligen Fahrzeugtyp angepasst wird.

Im Detail kann das Berechnen bzw. Bestimmen der Schwerpunkte auf der Grundlage der ermittelten Messwert bzw. Merkmalsvektoren von Messwerten erfolgen. Das Bestimmen der Schwerpunkte sowie der Anzahl der Schwerpunkte kann automatisiert erfolgen. Die Anzahl der Schwerpunkte innerhalb einer räumlichen Zone soll möglichst gering sein und/oder die räumliche Zone möglichst genau beschreiben. Die Anzahl der Schwerpunkte kann für jede räumliche Zone beliebig gewählt werden. Beispielsweise kann die Anzahl der Schwerpunkte einer Zone zweihundert Schwerpunkte umfassen. Die Anzahl der Schwerpunkte kann kleiner als die Anzahl der ermittelten Messwerte sein. Für das Bestimmen der Schwerpunkte kann beispielsweise ein kMeans-Verfahren verwendet werden. Das kMeans-Verfahren kann eine vorgegebene Anzahl an Schwerpunkten so wählen, dass eine Distanz der ermittelten Messwerte bzw. Merkmalsvektoren zu einem Schwerpunkt möglichst gering ist. Die Distanz kann dabei beispielsweise eine Euklidische Distanz oder eine Manhattan Distanz sein.

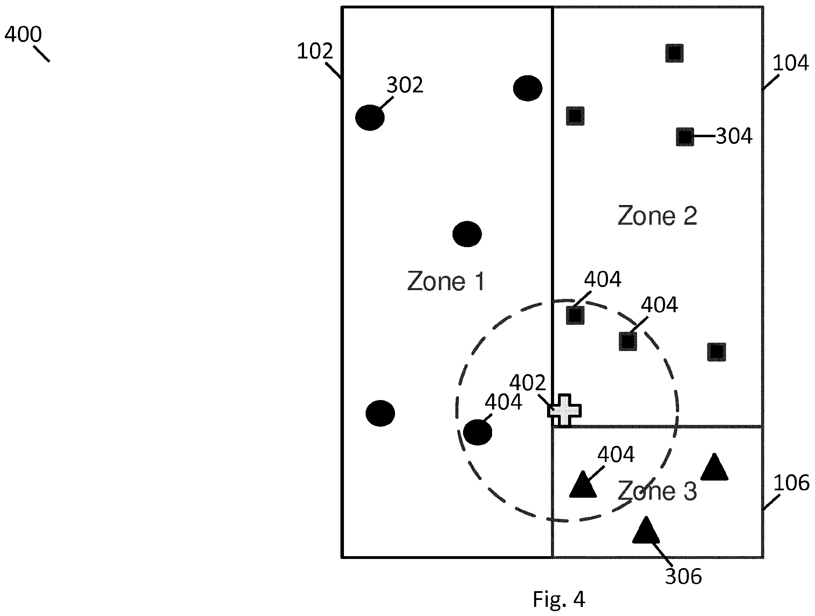

Die bestimmten Schwerpunkte können mit der Testmenge verifiziert werden. Dazu kann ein Messwert bzw. ein Merkmalsvektor von Messwerten aus der Testmenge ausgewählt werden und die dazugehörige räumliche Zone bestimmt werden. Vorzugsweise kann für jeden Messwert bzw. Merkmalsvektor von Messwerten die dazugehörige räumliche Zone bestimmt werden. Das Bestimmen der räumlichen Zone kann wie in Fig. 4 beschrieben erfolgen. Ist eine Zone korrekt bestimmt worden, kann ein Parameter, der eine Anzahl der erfolgreich zugeordneten Zonen repräsentiert, erhöht werden. Aus dem Verhältnis der erfolgreich zugeordneten Zonen zu der Gesamtanzahl der bestimmten Zonen kann eine Erfolgsrate berechnet werden. Die Erfolgsrate kann ein Indikator für die Güte der bestimmten Schwerpunkte und damit eine Güte für die Referenzdaten der Positionsbestimmung von Objekten sein. Überschreitet die Erfolgsrate einen vorgegebenen Schwellwert, können die bestimmten Schwerpunkte als Referenzdaten bzw. als Referenzdatensatz in einem Steuergerät des Fahrzeugs gespeichert werden. In anderen Worten: Die bestimmten Schwerpunkte sind erfolgreich durch die Testmenge verifiziert worden.

Falls die Erfolgsrate den vorgegeben Schwellwert nicht überschreitet, kann ein erneutes Bestimmen der Schwerpunkte durchgeführt werden. Für die erneute Berechnung der der Schwerpunkte kann beispielsweise die Anzahl der Schwerpunkte geändert werden. Beispielsweise kann die Anzahl der Schwerpunkte in der räumlichen Zone erhöht werden, in der bei der Verifikation die Zone fehlerhaft bestimmt wurde. Weiterhin kann die Anzahl der Messwerte bzw. Merkmalsvektoren der Testmenge verändert werden. Nach einer Änderung der Anzahl der Schwerpunkte und/oder der Testmenge können die Schwerpunkte erneut, wie oben beschrieben, bestimmt und mittels der Testmenge verifiziert werden. Die Bestimmung der Schwerpunkte und die Verifikation mittels der Testmenge kann solange durchgeführt werden, bis die Erfolgsrate den vorgegebenen Schwellwert überschreitet. Überschreitet die Erfolgsrate einen vorgegebenen Schwellwert, können die bestimmten Schwerpunkte als Referenzdaten bzw. als Referenzdatensatz in einem Steuergerät des Fahrzeugs gespeichert werden. Für die erneute Berechnung der Schwerpunkte können die ermittelten Messwerte bzw. Merkmalsvektoren von Messwerten verwendet werden.

**Fig. 4** zeigt ein Beispiel für eine Positionsbestimmung 400 eines Objekts relativ zu einem Fahrzeug mittels Schwerpunkten. Das Objekt kann ein Messwert bzw. einen Merkmalsvektor von Messwerten aus der Testmenge sein. Das Objekt kann ferner ein Gerät, insbesondere ein Identifikationsgerät, sein, das ein oder mehrere Funksignale des Fahrzeugs empfängt, einen oder mehrere Messwerte der Funksignale ermittelt und diese an jeder Position des Objekts an das Fahrzeug übermittelt. Vorzugsweise können die empfangenen Messwerte einer Vorverarbeitung unterzogen werden. Die Vorverarbeitung kann physikalische Effekte des Funksignals berücksichtigen. Beispielsweise kann bei jedem Messwert die dritte Wurzel berechnet werden, um den Effekt, dass ein magnetisches Feld mit der dritten Potenz abnimmt, zu dämpfen. Hiermit können effizient physikalische Effekte des Funksignals gefiltert werden, um eine präzisere Bestimmung eines Merkmalsvektors basierend auf den Messwerten und damit eine präzisere Bestimmung der Position des Objekts zu ermöglichen. Die Vorverarbeitung der Messwerte kann bei der Bestimmung der Schwertpunkte bzw. der Referenzdaten und bei der Positionsbestimmung eines Objekts gleich sein, d.h. die gleiche Funktion zur Verarbeitung der Messwerte wird auf die ermittelten Messwerte angewandt. Aus den übermittelten Messwerten kann das Fahrzeug bzw. das Steuergerät des Fahrzeugs einen Merkmalsvektor, der die ermittelten Messwerte für eine Position des Objekts umfasst, erzeugen. Das Erzeugen des Merkmalsvektors kann beispielweise das Hinzufügen eines ermittelten Messwerts für jedes empfangene Funksignal einer Kommunikationsantenne des Fahrzeugs zu einem Vektor an einer Position des Objekts umfassen. Wie in Fig. 4 gezeigt, befindet sich das Objekt an Position 402. Die Position des Objekts befindet sich in der räumlichen Zone 104 nahe an den Grenzen zu den räumlichen Zonen 102 und 106.

Für die Positionsbestimmung des Objekts kann ein Abstand bzw. eine Distanz, z.B. eine Euklidische Distanz oder eine Manhattan Distanz, zwischen dem erzeugten Merkmalsvektor und bekannten Merkmalsvektoren, d.h. die oben bestimmten Schwerpunkte der Referenzdaten bestimmt werden. Im Detail kann eine vorgegebene Anzahl von bekannten Merkmalsvektoren in der Nähe des erzeugten Merkmalsvektors bestimmt werden. Dazu wird der Abstand zwischen dem erzeugten Merkmalsvektor und jedem der bekannten Merkmalsvektoren berechnet und die bekannten Merkmalsvektoren anhand des berechneten Abstands zu dem erzeugten Merkmalsvektors sortiert. Im Anschluss kann die vorgegebene Anzahl von bekannten Merkmalsvektoren ausgewählt werden, die den kürzesten Abstand zu dem erzeugten Merkmalsvektor haben. Die ausgewählten Merkmalsvektoren sind die Merkmalsvektoren in der Nähe des erzeugten Merkmalsvektors, d.h. in der Nähe der Position des Objekts. Im Beispiel von Fig. 4 befinden sich vier bekannte Merkmalsvektoren bzw. Schwerpunkte 404 in der Nähe der Position 402 des Objekts.

Die ausgewählten Merkmalsvektoren werden zum Ermitteln der räumlichen Zone des erzeugten Merkmalsvektors verwendet. Dazu wird bestimmt, welche räumliche Zone am häufigsten mit den ausgewählten Merkmalsvektoren verknüpft ist. Die räumliche Zone, die am häufigsten mit den ausgewählten Merkmalsvektoren verknüpft ist, ist die räumliche Zone des erzeugten Merkmalsvektors. In anderen Worten: Die räumliche Zone des Objekts ist die räumliche Zone, die durch einen Mehrheitsentscheid unter den räumlichen Zonen, die mit den ausgewählten Merkmalsvektoren verknüpft sind, bestimmt wird. Wie in Fig. 4 gezeigt, befindet sich jeweils ein ausgewählter Merkmalsvektor bzw. Schwerpunkt in den räumlichen Zonen 102 und 106, während sich zwei ausgewählte Merkmalsvektoren bzw. Schwerpunkte in der räumlichen Zone 104 befinden. Durch die Anwendung eines Mehrheitsentscheids, wie oben beschrieben, kann bestimmt werden, dass sich die Position 402 des Objekts in der räumlichen Zone 104 befindet.

Die Position von Objekten kann unabhängig von der Anzahl der Messwerte eines Merkmalsvektors bestimmt werden. Ein Messwert eines Merkmalsvektors entspricht üblicherweise einem Messwert eines Merkmals eines Funksignals einer Kommunikationsantenne eines Fahrzeugs. Durch die Unabhängigkeit der Positionsbestimmung von der Anzahl der Messwerte eines Merkmalsvektors kann die Anzahl der Kommunikationsantennen im Fahrzeug reduziert werden, um Kosten zu reduzieren. Ferner können die Merkmale der Funksignale beliebig gewählt werden. Beispielsweise können als Merkmale die Feldstärke, die Phasenlage, und/oder die Richtung des Funksignals verwendet werden. Die Positionsbestimmung der Objekte kann somit unabhängig von den physikalischen Merkmalen der Funksignale erfolgen.

Die Ermittlung der Referenzdaten zur Positionsbestimmung kann vollständig automatisiert auf Grundlage der ermittelten Messwerte erfolgen, um eine vorgegebene Erfolgsrate bei der Bestimmung einer vordefinierten räumlichen Zone für ein Objekt relativ zu einem Fahrzeug zu erreichen. Ein manuelles Erzeugen von Referenzdaten und/oder ein manuelles Überprüfen der Referenzdaten für jedes Fahrzeug bzw. jeden Fahrzeugtyp ist nicht notwendig.

### Bezugszeichenliste

- 100: Aufteilung eines Bereichs in Räumliche Zonen
- 102: Zone 1
- 104: Zone 2
- 106: Zone 3
- 200: Messwertaufnahme
- 202: Messwert in Zone 1
- 204: Messwert in Zone 2
- 206: Messwert in Zone 3
- 300: Bestimmen von Schwerpunkten
- 302: Schwerpunkt in Zone 1
- 304: Schwerpunkt in Zone 2
- 306: Schwerpunkt in Zone 3
- 400: Positionsbestimmung von Objekten
- 402: Position des Objekts
- 404: naheliegende Schwerpunkte

## Patentansprüche

1. Verfahren zum Erzeugen von Referenzdaten für eine Positionsbestimmung von Objekten relativ zu einem Fahrzeug, das Verfahren umfassend:
Ermitteln eines Messwerts (202, 204, 206) eines Funksignals für jede Position eines Objekts aus einer vorgegebenen Anzahl an Positionen des Objekts in mindestens zwei räumlichen Zonen (102, 104, 106) des Fahrzeugs;
Bestimmen von Schwerpunkten (302, 304, 306) für die ermittelten Messwerte (202, 204, 206) in jeder räumlichen Zone (102, 104, 106) des Fahrzeugs,
wobei jeder Schwerpunkt (302, 304, 306) eine Gruppe von ermittelten Messwerten (202, 204, 206) in einer der vordefinierten räumlichen Zonen (102, 104, 106) des Fahrzeugs repräsentiert;
Erzeugen einer Testmenge aus den ermittelten Messwerten (202, 204, 206);
Auswählen eines Messwerts (202, 204, 206) aus der Testmenge;
Berechnen einer Position des ausgewählten Messwerts relativ zu einem oder mehreren gespeicherten Schwerpunkten (302, 304, 306);
Bestimmen einer räumlichen Zone (102, 104, 106) zugehörig zu der berechneten Position des ausgewählten Messwerts;
Verifizieren der bestimmten räumlichen Zone des ausgewählten Messwerts;
Aktualisieren einer Erfolgsrate für die Bestimmung der vordefinierten räumlichen Zonen (102, 104, 106); und
Falls die Erfolgsrate für die Bestimmung der vordefinierten räumlichen Zonen (102, 104, 106) einen vorgegebenen Schwellwert überschreitet: Speichern der Schwerpunkte (302, 304, 306) als Referenzdaten für die Positionsbestimmung von Objekten relativ zu dem Fahrzeug in dem Fahrzeug.

2. Verfahren nach Anspruch 1, wobei jeder Schwerpunkt (302, 304, 306) so bestimmt wird, dass eine Distanz der ermittelten Messwerte (202, 204, 206) zu einem Schwerpunkt (302, 304, 306) möglichst gering ist.

3. Verfahren nach einem der vorhergehenden Ansprüche, wobei eine Anzahl der Schwerpunkte (302, 304, 306) in einer der vordefinierten räumlichen Zonen in Abhängigkeit einer vorgegebenen Erfolgsrate für eine Bestimmung der vordefinierten räumlichen Zonen (102, 104, 106) festgelegt wird; und/oder
wobei die Anzahl der Schwerpunkte (302, 304, 306) kleiner als die Anzahl der ermittelten Messwerte (202, 204, 206) in einer der vordefinierten räumlichen Zonen (102, 104, 106) ist.

4. Verfahren nach einem der vorhergehenden Ansprüche, das Verfahren weiterhin umfassend:
Falls die Erfolgsrate für die Bestimmung der vordefinierten räumlichen Zonen (102, 104, 106) den vorgegebenen Schwellwert unterschreitet:
Ändern der Anzahl der Schwerpunkte (302, 304, 306);
Berechnen der geänderten Anzahl von Schwerpunkten für die ermittelten Messwerte in jeder räumlichen Zone (102, 104, 106) des Fahrzeugs;
Auswählen eines Messwerts aus der Testmenge;
Berechnen einer Position des ausgewählten Messwerts relativ zu einem oder mehreren gespeicherten Schwerpunkten (302, 304, 306);
Bestimmen einer räumlichen Zone (102, 104, 106) zugehörig zu der berechneten Position des ausgewählten Messwerts;
Verifizieren der bestimmten räumlichen Zone (102, 104, 106) des ausgewählten Messwerts;
Aktualisieren der Erfolgsrate für die Bestimmung der vordefinierten räumlichen Zonen (102, 104, 106).

5. Verfahren nach einem der vorhergehenden Ansprüche, wobei die empfangenen Messwerte einer Vorverarbeitung unterzogen werden, bevor die Schwerpunkte bestimmt werden, und
wobei die Vorverarbeitung vorzugsweise physikalische Effekte des Funksignals filtert.

6. Verfahren nach einem der vorhergehenden Ansprüche, wobei die ermittelten Messwerte in einem Grenzbereich zwischen mindestens zwei räumlichen Zonen (102, 104, 106) höher als die ermittelten Messwerte außerhalb des Grenzbereichs gewichtet sind.

7. Computer-lesbares Medium zum Erzeugen von Referenzdaten für eine Positionsbestimmung von Objekten relativ zu einem Fahrzeug, wobei das computer-lesbare Medium Instruktionen umfasst, die, wenn ausgeführt auf einem Rechner, das Verfahren nach einem der Ansprüche 1 bis 6 ausführt.

8. System zum Erzeugen von Referenzdaten für eine Positionsbestimmung von Objekten relativ zu einem Fahrzeug, wobei das System dazu ausgebildet ist, das Verfahren nach einem der Ansprüche 1 bis 6 auszuführen.

## Claims

1. A method for generating reference data for determining a position of objects relative to a vehicle, the method comprising the steps of:
ascertaining a measured value (202, 204, 206) of a radio signal for each position of an object from a predefined number of positions of the object in at least two spatial zones (102, 104, 106) of the vehicle;
determining focal points (302, 304, 306) for the ascertained measured values (202, 204, 206) in each spatial zone (102, 104, 106) of the vehicle,
wherein each focal point (302, 304, 306) represents a group of ascertained measured values (202, 204, 206) in one of the predefined spatial zones (102, 104, 106) of the vehicle;
generating a test set from the ascertained measured values (202, 204, 206);
selecting a measured value (202, 204, 206) from the test set;
calculating a position of the selected measured value relative to one or more stored focal points (302, 304, 306);
determining a spatial zone (102, 104, 106) belonging to the calculated position of the selected measured value;
verifying the determined spatial zone of the selected measured value;
updating the success rate for the determination of the predefined spatial zones (102, 104, 106); and
if the success rate for the determination of the predefined spatial zones (102, 104, 106) exceeds a predefined threshold value:
storing the focal points (302, 304, 306) in the vehicle as reference data for determining the position of objects relative to the vehicle.

2. A method according to claim 1, wherein each focal point (302, 304, 306) is determined such that a distance between the ascertained measured values (202, 204, 206) and a focal point (302, 304, 306) is as short as possible.

3. A method according to either one of the preceding claims, wherein a number of focal points (302, 304, 306) in one of the predefined spatial zones is stipulated depending on a predefined success rate for a determination of the predefined spatial zones (102, 104, 106); and/or wherein the number of focal points (302, 304, 306) is smaller than the number of determined measured values (202, 204, 206) in one of the predefined spatial zones (102, 104, 106).

4. A method according to any one of the preceding claims, the method further comprising the steps of:
if the success rate for the determination of the predefined spatial zones (102, 104, 106) drops below the predefined threshold value:
modifying the number of focal points (302, 304, 306);
calculating the modified number of focal points for the ascertained measured values in each spatial zone (102, 104, 106) of the vehicle;
selecting a measured value from the test set;
calculating a position of the selected measured value relative to one or more stored focal points (302, 304, 306);
determining a spatial zone (102, 104, 106) belonging to the calculated position of the selected measured value;
verifying the determined spatial zone (102, 104, 106) of the selected measured value; and
updating the success rate for determining the predefined spatial zones (102, 104, 106).

5. A method according to any one of the preceding claims, wherein the received measured values are subjected to a preprocessing before the focal points are determined, and
wherein the preprocessing preferably filters physical effects of the radio signal.

6. A method according to any one of the preceding claims, wherein the ascertained measured values are given a higher weighting in a border region between at least two spatial zones (102, 104, 106) than the ascertained measured values outside the border region.

7. Computer-readable medium for generating reference data for determining a position of objects relative to a vehicle, wherein the computer-readable medium comprises instructions which, when executed on a computer, carry out the method according to any one of claims 1 to 6.

8. System for generating reference data for determining a position of objects relative to a vehicle, wherein the system is configured to carry out the method according to any one of claims 1 to 6.

## Revendications

1. Procédé permettant de créer des données de référence pour permettre la détermination de la position d'objets par rapport à un véhicule, ce procédé comprenant des étapes consistant à :
détecter une valeur de mesure (202, 204, 206) d'un signal radio pour chaque position d'un objet à partir d'un nombre prédéfini de positions de l'objet dans au moins deux zones spatiales (102, 104, 106) du véhicule, déterminer les centres de gravité (302, 304, 306) des valeurs de mesure détectées (202, 204, 206) dans chaque zone spatiale (102, 104, 106) du véhicule,
chaque centre de gravité (302, 304, 306) représentant un groupe de valeurs de mesure (202, 204, 206) détectées dans l'une des zones spatiales (102, 104, 106) prédéfinies du véhicule,
créer un ensemble de test à partir des valeurs de mesure (202, 204, 206) détectées,
sélectionner une valeur de mesure (202, 204, 206) parmi l'ensemble de test,
calculer la position de la valeur de mesure sélectionnée par rapport à au moins un centre de gravité (302, 304, 306) enregistré,
déterminer une zone spatiale (102, 104, 106) appartenant à la position calculée de la valeur de mesure sélectionnée,
vérifier la zone spatiale déterminée de la valeur de mesure sélectionnée, actualiser le taux de réussite de la détermination des zones spatiales (102, 104, 106) prédéfinies, et
lorsque le taux de réussite de la détermination des zones spatiales (102, 104, 106) prédéfinies dépasse une valeur de seuil prédéfinie :
enregistrer les centres de gravité (302, 304, 306) en tant que données de référence pour la détermination de la position d'objets par rapport au véhicule dans le véhicule.

2. Procédé conforme la revendication 1,
selon lequel chaque centre de gravité (302, 304, 306) est déterminé de sorte que la distance des valeurs de mesure (202, 204, 206) détectées à un centre de gravité (302, 304, 306) soit aussi faible que possible.

3. Procédé conforme à l'une des revendications précédentes,
selon lequel le nombre de centres de gravité (302, 304, 306) dans l'une des zones spatiales prédéfinies est déterminé en fonction d'un taux de réussite prédéfini pour la détermination des zones spatiales (102, 104, 106) prédéfinies, et/ou
le nombre de centres de gravité (302, 304, 306) est inférieur au nombre de valeurs de mesure (202, 204, 206) détectées dans l'une des zones spatiales (102, 104, 106) prédéfinies.

4. Procédé conforme à l'une des revendications précédentes, comprenant en outre des étapes consistant à :
lorsque le taux de réussite de la détermination des zones spatiales (102, 104, 106) prédéfinies passe au-dessous de la valeur de seuil prédéfinie :
modifier le nombre de centres de gravité (302, 304, 306),
calculer le nombre modifié de centres de gravité des valeurs de mesure détectées dans chaque zone spatiale (102, 104, 106) du véhicule,
sélectionner une valeur de mesure dans l'ensemble de test,
calculer la position de la valeur de mesure sélectionnée par rapport à au moins un centre de gravité (302, 304, 306) enregistré,
déterminer une zone spatiale (102, 104, 106) appartenant à la position calculée de la valeur de mesure sélectionnée,
vérifier la zone spatiale (102, 104, 106) déterminée de la valeur de mesure sélectionnée,
actualiser le taux de réussite de la détermination des zones spatiales (102, 104, 106) prédéfinies.

5. Procédé conforme à l'une des revendications précédentes,
selon lequel les valeurs de mesure reçues sont soumises à un pré-traitement avant que les centres de gravité soient déterminés, et
le pré-traitement filtre de préférence des effets physiques du signal radio.

6. Procédé conforme à l'une des revendications précédentes,
selon lequel les valeurs de mesure détectées sont pondérées plus fortement dans une zone limite entre au moins deux zones spatiales (102, 104, 106) que les valeurs de mesure détectées à l'extérieur de la zone limite.

7. Support lisible par ordinateur permettant de créer des données de référence pour la détermination de la position d'objets par rapport à un véhicule, ce support lisible par ordinateur comprenant des instructions qui, lorsqu'elles sont exécutées sur un calculateur permettent la mise en oeuvre du procédé conforme à l'une des revendications 1 à 6.

8. Système permettant de créer des données de référence pour la détermination de la position d'objets par rapport à un véhicule, ce système étant réalisé pour permettre la mise en oeuvre du procédé conforme à l'une des revendications 1 à 6.
